# EUROPÄISCHE PATENTANMELDUNG

(11) **EP 3 181 781 A1**
(43) Veröffentlichungstag der Anmeldung: **21.06.2017**
(21) Anmeldenummer: 15201058.3
(22) Anmeldetag: 18.12.2015
(51) Int. Cl.: E04G 17/04, E04G 17/06

(54) **SCHALUNGSANKERAUFNAHME**

(71) Anmelder: DOKA GmbH, 3300 Amstetten (AT)
(72) Erfinder:
(74) Vertreter: Sonn & Partner Patentanwälte

(57) **Zusammenfassung**

Schalungsankeraufnahme (8) zur Anordnung an einem Lagerelement (7) eines Schalungselementes (2), mit einem Aufnahmeelement (10), welches eine Aufnahmeöffnung (10a) zur Einführung eines Ankerstabs (4) und einen Kugelabschnitt (14) zur Lagerung an dem Lagerelement (7) des Schalungselementes (2) aufweist, und mit einer Sicherungseinrichtung (20) zur Sicherung des Aufnahmeelements (10) an dem Lagerelement (7) des Schalungselementes (2), wobei die Sicherungseinrichtung (20) ein Distanzelement (25) zur Anlage an dem Lagerelement (7) des Schalungselementes (2) aufweist, wobei das Distanzelement (25) eine Montageöffnung (25a) zur Halterung an dem Aufnahmeelement (10) aufweist und Schalungsvorrichtung (1) mit einer solchen Schalungsankeraufnahme (8).

## Beschreibung

Die Erfindung betrifft eine Schalungsankeraufnahme zur Anordnung an einem Lagerelement eines Schalungselementes, mit einem Aufnahmeelement, welches eine Aufnahmeöffnung zur Einführung eines Ankerstabs und einen Kugelabschnitt zur Lagerung an dem Lagerelement des Schalungselementes aufweist, und mit einer Sicherungseinrichtung zur Sicherung des Aufnahmeelements an dem Lagerelement des Schalungselementes.

Weiters betrifft die Erfindung eine Schalungsvorrichtung mit einer solchen Schalungsankeraufnahme.

Eine Schalungsankeraufnahme dieser Art ist bereits aus der EP 2 816 175 bekannt.

Bei der Errichtung eines Bauwerks werden Schalungselemente mit einem gewissen Abstand zueinander aufgestellt und vor Verfüllen des auf diese Weise ausgebildeten Spalts mit einem Verfüllmaterial durch Schalungsanker miteinander verbunden. Die Schalungsanker werden nach dem Aushärten des Betons entnommen, sodass im nachfolgenden Schritt die Schalungselemente von der so ausgebildeten Wand gelöst werden können. Durch die Verwendung einer Schalungsankeraufnahme mit einem Kugelabschnitt, der in einem Abstütz- bzw. Lagerbauteil eines Schalungselements angeordnet wird, kann eine Verschwenkbarkeit des Schalungsankers aus der normalen Ausrichtung gegenüber dem Schalungselement um beispielsweise 4° erzielt werden. Vorteilhafterweise kann ein Versatz zwischen Ankerdurchtrittsöffnungen gegenüberliegender Schalungsankeraufnahmen ausgeglichen werden, indem eine gewisse Abweichung von der Normalen gegenüber einem Schalungselement sichergestellt wird. Trotz dieses Ausgleichs gewährleistet die erfindungsgemäße Schalungsankeraufnahme bzw. Schalungsanker eine tragende Verankerung der Schalungselemente und eine Dichtheit gegenüber dem zwischen den Schalungselementen ausgebildeten Verfüllbereich. Ferner stellt diese Ausgestaltung sicher, dass ein Schalungsanker von einer Seite bedient werden kann. Das Aufstellen und Verbinden von Schalungselementen wird auf diese Weise vereinfacht, und folglich können Arbeitskosten reduziert werden.

Nachteilig am Stand der Technik ist die vergleichsweise umständliche Halterung der Schalungsankeraufnahme an dem Schalungselement. Zu diesem Zweck sieht die EP 2 816 175 in einer bevorzugten Ausführungsform eine Klappfeder vor, welche im eingeklappten Zustand gegen die Innenwandung des Abstützbauteils des Schalungselements verspreizt ist. Durch die Anordnung der Klappfeder wird die Schalungsankeraufnahme an dem Schalungselement gesichtert, wobei jedoch die Verkippbarkeit der Schalungsankeraufnahme gewahrt bleibt. Die Anbringung der Klappfeder bringt den Nachteil mit sich, dass die Sicherung der Schalungsankeraufnahme ausschließlich durch den Reibschluss zwischen der Klappfeder und dem Abstütz- bzw. Lagerelement bewerkstelligt wird. Demnach besteht eine gewisse Gefahr, dass sich die Schalungsankeraufnahme insbesondere bei Auf- und Abbau der Schalungsanordnung ungewollt aus dem Abstützbauteil lösen kann. Weiters kann die Klappfeder beim Transport verloren gehen. Darüber hinaus gestaltet es sich bei dieser Ausführungsform vergleichsweise schwierig, die Verkippung der Schalungsankeraufnahme gegenüber dem Schalungselement auf einen gewünschten Winkelbereich zu begrenzen. Demnach ist die Winkeleinstellung vergleichsweise ungenau.

Demnach besteht die Aufgabe der Erfindung darin, zumindest einzelne der Nachteile des Standes der Technik zu lindern bzw. zu beseitigen. Die Erfindung setzt sich daher insbesondere zum Ziel, eine Schalungsankeraufnahme der eingangs erwähnten Art dahingehend weiterzuentwickeln, dass die Sicherung der Schalungsankeraufnahme im montierten Zustand an der Schalungsvorrichtung erleichtert wird.

Erfindungsgemäß weist die Sicherungseinrichtung ein Distanzelement zur Anlage an dem Lagerelement des Schalungselementes auf, wobei das Distanzelement eine Montageöffnung zur Halterung an dem Aufnahmeelement aufweist.

Durch den Kugelabschnitt kann die Schalungsankeraufnahme im bestimmungsgemäßen Betriebszustand um einen von 0° verschiedenen Kippwinkel von beispielsweise zumindest 3°, insbesondere im Wesentlichen 4°, aus einer rechtwinkeligen Stellung relativ zum Schalungselement in eine Schiefstellung gekippt werden. Dadurch kann die Anbringung eines Schalungsankers erleichtert werden, welcher von einem gegenüberliegenden Schalungselement her in die Aufnahmeöffnung der Schalungsankeraufnahme eingeführt wird. Zur verkippbaren Lagerung der Schalungsankeraufnahme kann das Lagerelement eine Kugelpfanne, d.h. einen sphärisch konkav gekrümmten Abschnitt, aufweisen, an welcher der Kugelabschnitt der Schalungsankeraufnahme gelagert ist. Darüber hinaus weist die erfindungsgemäße Schalungsankeraufnahme ein Distanzelement auf, mit welchem in der bestimmungsgemäßen Betriebsstellung der Schalungsankeraufnahme an dem Lagerelement der Schalungsvorrichtung eine Verkippung des Aufnahmeelements bezüglich des Schalungselements in zumindest eine Kipprichtung begrenzbar ist. Demnach verhindert das Distanzelement, dass die Schalungsankeraufnahme über den gewünschten maximalen Kippwinkel hinaus verkippt wird, indem das Distanzelement bei Erreichen des maximalen Kippwinkels das Lagerelement der Schalungsvorrichtung kontaktiert. Vorteilhafterweise bewirkt das Distanzelement daher eine gewisse Zentrierung der Schalungsankeraufnahme bezüglich des Lagerelements der Schalungsvorrichtung. Vorzugsweise ist der Kugelabschnitt in Achsrichtung der Aufnahmeöffnung für den Schalungsanker gesehen am einen Endbereich und das Distanzelement am anderen Endbereich der Schalungsankeraufnahme angeordnet. Das Distanzelement weist bevorzugt eine größere Ausdehnung senkrecht zur Achse der Aufnahmeöffnung (d.h. senkrecht zur Längsachse des Aufnahmeelements) als der Befestigungsabschnitt des Aufnahmeelements auf, an welchem das Distanzelement fixiert ist. Am Außenumfang des Distanzelements ist eine Kontaktfläche ausgebildet, welche bei einem bestimmten Kippwinkel der Schalungsankeraufnahme bezüglich des Schalungselements mit einer entsprechenden Kontaktfläche des Lagerelements in Kontakt tritt. Als Kontaktfläche weist das Lagerelement bevorzugt eine zylindrische oder kegelstumpfförmige Innenfläche auf. Durch die Halterung des Distanzelements an dem Aufnahmeelement macht das Distanzelement, anders als die am Lagerelement fixierte Klappfeder beim Stand der Technik, die Verkippung der Schalungsankeraufnahme mit. Zur Halterung des Distanzelements an dem Aufnahmeelement weist das Distanzelement eine vorzugsweise rundum geschlossene Montageöffnung auf, in welcher der Befestigungsabschnitt des Aufnahmeelements vorzugsweise im Wesentlichen passgenau aufgenommen ist. Vorteilhafterweise ist daher das Distanzelement über die Montageöffnung an dem Aufnahmeelement fixiert, wodurch die Montage und Demontage der Schalungsvorrichtung insgesamt wesentlich erleichtert wird.

Um das Einführen des Schalungsankers in die Schalungsankeraufnahme zu ermöglichen bzw. zu erleichtern, ist bei einer bevorzugten Ausführungsform zwischen dem Aufnahmeelement und dem Distanzelement eine Drehsicherung vorgesehen, welche vorzugsweise zumindest eine Erhebung und eine entsprechende Vertiefung aufweist. Je nach Ausführung kann die Erhebung am Aufnahmeelement und die Vertiefung am Distanzelement oder umgekehrt vorgesehen sein. Durch den formschlüssigen Eingriff der Erhebung in die Vertiefung wird eine Verdrehung des Distanzelements relativ zum Aufnahmeelement um dessen Längsachse blockiert. Bevorzugt ist die Aufnahmeöffnung des Aufnahmeelements zumindest abschnittsweise mit einem Innengewinde versehen, in welches ein entsprechendes Außengewinde eines Ankerstabs eingreift. Durch die Drehsicherung kann das Einschrauben des Ankerstabs in die Schalungsankeraufnahme erleichtert werden.

Wenn das Distanzelement am Außenumfang eine vorzugsweise kreisbogenförmig gekrümmte erste Kontaktfläche zur Anlage an dem Lagerelement des Schalungselementes aufweist, kann eine zuverlässige Abstützung des Distanzelements an dem Lagerelement erfolgen. Bevorzugt weist das Lagerelement eine entsprechende konkave, insbesondere kegelstumpfförmige oder zylindrische, Kontaktfläche auf, an welcher die erste Kontaktfläche des Distanzelements zur Anlage kommt.

Gemäß einer besonders bevorzugten Ausführung weist die erste Kontaktfläche des Distanzelements einen ersten Radialabstand zur Mittelachse des Aufnahmeelements und eine zweite Kontaktfläche des Distanzelements einen zweiten Radialabstand zur Mittelachse des Aufnahmeelements auf, wobei der erste Radialabstand der ersten Kontaktfläche größer als der zweite Radialabstand der zweiten Kontaktfläche ist. Für die Zwecke dieser Offenbarung ist als Radialabstand der maximale Abstand der jeweiligen Kontaktfläche zur Mittelachse des Aufnahmeelements zu verstehen, welcher mit der Achse der Aufnahmeöffnung des Aufnahmeelements zusammenfällt. Demnach ist die zweite Kontaktfläche des Distanzelements näher an der Mittelachse des Aufnahmeelements angeordnet als die erste Kontaktfläche des Distanzelements. Dies bedeutet, dass die Montageöffnung des Aufnahmeelements exzentrisch bezüglich der Haupterstreckungsebene des Aufnahmeelements (d.h. der Ebene senkrecht zur Achse der Aufnahmeöffnung) angeordnet ist. Das Aufnahmeelement kann wahlweise mit der ersten Kontaktfläche oder mit der zweiten Kontaktfläche an dem Lagerelement angelegt werden. Wenn die erste Kontaktfläche an dem Lagerelement angelegt ist, weist die Mittelachse des Aufnahmeelements einen geringeren maximalen Kippwinkel zur zentralen Achse des Lagerelements als bei Anlage der zweiten Kontaktfläche des Aufnahmeelements an dem Lagerelement auf. Durch die asymmetrische Anordnung des Distanzelements bezüglich der Mittelachse des Aufnahmeelements kann der Einbau der Schalungsankeraufnahme an dem Schalungselement vereinfacht werden.

Um die Handhabung der Schalungsankeraufnahme zu erleichtern, ist es günstig, wenn das Distanzelement zwischen einer ersten Funktionsstellung, insbesondere zum Einbau des Aufnahmeelements an dem Lagerelement, und einer zweiten Funktionsstellung, insbesondere zur Begrenzung einer Verkippung des Aufnahmeelements in eine erste Kipprichtung, überführbar ist, wobei das Distanzelement in der zweiten Funktionsstellung um einen von 0° oder 360° verschiedenen Winkel von vorzugsweise im Wesentlichen 180° relativ zum Aufnahmeelement verdreht angeordnet ist. Bei dieser Ausführung kann das Distanzelement zwischen zwei verschiedenen Stellungen auf dem Aufnahmeelement versetzt werden. Die erste Funktionsstellung ist bevorzugt als Einbaustellung ausgebildet, um die Montage der Schalungsankeraufnahme an dem Lagerelement zu ermöglichen bzw. zu erleichtern. Die zweite Funktionsstellung ist bevorzugt als Betriebsstellung ausgebildet, in welcher das Distanzelement eine Verkippung der Schalungsankeraufnahme bezüglich des Lagerelements in eine erste Kipprichtung begrenzt. Zur Überführung des Distanzelements zwischen der ersten Funktionsstellung und der zweiten Funktionsstellung wird das Distanzelement bevorzugt um im Wesentlichen 180° um die Mittelachse des Aufnahmeelements verdreht.

Gemäß einer besonders bevorzugten Ausführungsform ist das Distanzelement von der ersten Funktionsstellung in Längsrichtung des Aufnahmeelements in eine erste Zwischenstellung verschieblich, in welcher die Drehsicherung zwischen dem Aufnahmeelement und dem Distanzelement in einem gelösten Zustand vorliegt, wobei das Distanzelement aus der ersten Zwischenstellung in eine zweite Zwischenstellung verdrehbar ist, aus welcher das Distanzelement in Längsrichtung des Aufnahmeelements in die zweite Funktionsstellung verschieblich ist, in der die Drehsicherung in einem gesicherten Zustand vorliegt. Bei dieser Ausführung ist das Distanzelement in Längsrichtung des Aufnahmeelements verschieblich an dem Aufnahmeelement gehalten. Durch Verschieben des Distanzelements in die eine Richtung entlang des Aufnahmeelements wird die Drehsicherung gelöst, so dass das Distanzelement um einen von 0° und 360° verschiedenen Drehwinkel von vorzugsweise im Wesentlichen 180° verdrehbar ist. Danach kann das Distanzelement in die Gegenrichtung entlang des Aufnahmeelements verschoben werden, wobei die Drehsicherung wieder hergestellt wird. Wenn die Drehsicherung eine Erhebung am Aufnahmeelement und eine Vertiefung am Distanzelement (oder umgekehrt) aufweist, kann das Distanzelement so weit entlang des Aufnahmeelements verschoben werden, dass der Eingriff zwischen der Erhebung und der Vertiefung gelöst bzw. wieder hergestellt wird. Bei dieser Ausführung ist das Distanzelement in der ersten und zweiten Zwischenstellung jeweils vollständig in Längsrichtung des Aufnahmeelements versetzt zur Erhebung bzw. Vertiefung am Aufnahmeelement angeordnet.

Um das Distanzelement einfach und zuverlässig in der jeweiligen Funktionsstellung zu halten, ist es von Vorteil, wenn ein Federelement zur Vorspannung des Distanzelements in Richtung der ersten bzw. zweiten Funktionsstellung vorgesehen ist, wobei das Federelement bevorzugt eine Schraubenfeder zwischen dem Distanzelement und einer vorzugsweise kreisringförmigen Lagerfläche des Aufnahmeelements aufweist.

Gemäß einer weiteren bevorzugten Ausführungsform weist das Distanzelement lösbar miteinander verbundene Halbschalen auf, wobei das Distanzelement im verbundenen Zustand der Halbschalen in einer umlaufenden Nut des Aufnahmeelements angeordnet ist. Demnach können die beiden Halbschalen an dem Aufnahmeelement, beispielsweise durch eine Schraub-, Niet- oder Bolzenverbindung, lösbar miteinander verbunden werden. Die umlaufende Nut weist bevorzugt im Wesentlichen dieselbe Höhe, d.h. Erstreckung in Längsrichtung des Aufnahmeelements, wie das Distanzelement auf.

Um die Drehsicherung zwischen dem Distanzelement und dem Aufnahmeelement ohne Längsverschiebung des Distanzelements überwinden zu können, ist es günstig, wenn das Distanzelement in Längsrichtung des Aufnahmeelements unverschieblich an dem Aufnahmeelement gehalten ist, wobei die Drehsicherung zumindest ein elastisch verformbares Eingriffselement aufweist. Bei dieser Ausführung weist die Drehsicherung zumindest ein elastisch verformbares Eingriffselement, insbesondere in Form einer Rastnase, auf, welches mit einem entsprechenden Aufnahmeteil, insbesondere mit einer Einbuchtung, in Eingriff gebracht werden kann. Zum Versetzen des Distanzelements kann die formschlüssige Verbindung zwischen dem Eingriffselement und dem Aufnahmeteil durch elastische Verformung gelöst bzw. wieder hergestellt werden.

Um die Anordnung des Schalungsankers in der Aufnahmeöffnung des Aufnahmeelements zu ermöglichen bzw. zu erleichtern, weist die Sicherungseinrichtung bevorzugt ein Drehsicherungselement zur Drehsicherung des Aufnahmeelements gegenüber dem Lagerelement des Schalungselementes auf, wobei das Drehsicherungselement vorzugsweise einen Vorsprung am Aufnahmeelement zum Eingriff in eine Ausnehmung des Lagerelements des Schalungselementes aufweist.

Es können verschiedenste Ausführungen des Drehsicherungselements vorgesehen sein, welche dazu eingerichtet sein sollen, eine Verdrehung des Aufnahmeelements um dessen Mittelachse zu begrenzen bzw. zu verhindern. Bevorzugt ist jedoch eine Ausführung, bei welcher der Vorsprung des Drehsicherungselements unbeweglich an der Außenseite des Aufnahmeelements angeordnet ist. Zu diesem Zweck ist der Vorsprung bevorzugt einteilig mit einem insbesondere zylindrischen Abschnitt des Aufnahmeelements gebildet. Der Vorsprung des Drehsicherungselements erstreckt sich bevorzugt über einen Winkel kleiner 180°, insbesondere kleiner 90°, an der Außenseite des Aufnahmelements. Diese Ausführung ist insbesondere dann günstig, wenn das Distanzelement eine exzentrische Montageöffnung aufweist. In diesem Fall kann das Distanzelement zwischen einer Einbaustellung, in welcher die erste Kontaktfläche auf Seite des Vorsprungs angeordnet ist, und einer Betriebsstellung, in welcher die erste Kontaktfläche gegenüberliegend des Vorsprungs angeordnet ist, versetzt werden. In der Einbaustellung weist die Schalungsankeraufnahme daher eine geringere maximale Quer- bzw. Radialerstreckung senkrecht zur Mittelachse als in der Betriebsstellung auf. In der Einbaustellung des Distanzelements kann der Kugelabschnitt des Aufnahmeelements an der entsprechenden Kugelpfanne des Lagerelements angelegt werden. In der Betriebsstellung des Distanzelements steht der Vorsprung des Drehsicherungselements in Eingriff mit der Ausnehmung des Lagerelements, wobei die Schalungsankeraufnahme durch das Zusammenwirken des Drehsicherungselements und des Distanzelements gegen ein Entfernen oder ungewolltes Lösen aus dem Lagerelement gesichert ist. Diese Ausführung hat insbesondere den Vorteil, dass die Schalungsankeraufnahme über eine formschlüssige Verbindung zwischen dem Drehsicherungselement und dem Lagerelement an dem Schalungselement gehalten ist, wenn das Distanzelement in der Betriebsstellung angeordnet ist. Im Vergleich zur reibschlüssigen Verspreizung der Klappfeder beim Stand der Technik kann so besonders zuverlässig verhindert werden, dass die Schalungsankeraufnahme insbesondere beim Auf- und Abbau der Schalungsvorrichtung ungewollt von dem Lagerelement gelöst wird.

Zur Erzielung einer einfachen, kostengünstigen Ausführung kann als Distanzelement eine Distanzscheibe mit im Wesentlichen parallel zueinander angeordneten Außenseiten vorgesehen sein. Bei dieser Ausführung weist die Distanzscheibe eine im Wesentlichen konstante Wandstärke entlang deren Hauptebene auf.

Bei einer alternativen Ausführung weist das Distanzelement am Außenumfang einen von einem Plattenteil abstehenden, umlaufenden Flanschteil auf, welcher an der Außenseite die erste und die zweite Kontaktfläche ausbildet. Diese Ausführung zeichnet sich durch geringes Gewicht und Materialersparnis aus. Weiters kann das Distanzelement bei dieser Ausführung benachbart der Montageöffnung ein weiteres von dem Plattenteil abstehendes Flanschteil aufweisen, an welchem zumindest eine elastisch verformbare Erhebung ausgebildet ist.

Um die Handhabung der Schalungsankeraufnahme zu erleichtern, ist es günstig, wenn das Distanzelement mit einem Griffteil zur Überführung des Distanzelements zwischen der ersten Funktionsstellung und der zweiten Funktionsstellung verbunden ist, wobei das Griffteil bevorzugt durch zumindest eine Einbuchtung des Distanzelements gebildet ist.

Um die Montage sowie Demontage der Schalungsankeraufnahme zu erleichtern und das Distanzelement im Betrieb auf dem Aufnahmeelement zu halten, ist es günstig, wenn das Distanzelement mittels eines Sicherungselements, insbesondere mittels eines Sicherungsrings, Sicherungsfeder oder einer Schraubverbindung, gegen ein Entfernen vom Aufnahmeelement gesichert ist.

Die Erfindung wird nachstehend anhand von bevorzugten Ausführungsbeispielen, auf die sie jedoch nicht beschränkt sein soll, weiter erläutert. In der Zeichnung zeigt:
Fig. 1 eine Schnittansicht einer erfindungsgemäßen Schalungsvorrichtung mit zwei in Abstand zueinander angeordneten Schalungselementen, welche über einen Schalungsanker miteinander verbunden sind, wobei der Schalungsanker mit Hilfe je einer Schalungsankeraufnahme auf der Schließseite und der Stellseite der Schalungsvorrichtung gelagert ist;
Fig. 2 eine Detailansicht der Schalungsvorrichtung gemäß Fig. 1 im Bereich der Schalungsankeraufnahme an dem stellseitigen Schalungselement, wobei ein Distanzelement der Schalungsankeraufnahme in einer Einbaustellung angeordnet ist;
Fig. 3 eine Detailansicht gemäß Fig. 2, wobei das Distanzelement der Schalungsankeraufnahme in einer in Längsrichtung verschobenen ersten Zwischenstellung angeordnet ist;
Fig. 4 eine Detailansicht gemäß Fig. 2, 3, wobei das Distanzelement der Schalungsankeraufnahme in einer um 180° verdrehten zweiten Zwischenstellung angeordnet ist;
Fig. 5 eine Detailansicht gemäß Fig. 2 bis 4, wobei das Distanzelement der Schalungsankeraufnahme in einer in Längsrichtung zurück geschobenen Betriebsstellung angeordnet ist;
Fig. 6 eine Explosionsdarstellung der Schalungsankeraufnahme der Schalungsvorrichtung gemäß Fig. 1 bis 5;
Fig. 7, 8 schaubildliche Ansichten der Schalungsankeraufnahme der Schalungsvorrichtung gemäß Fig. 1 bis 6;
Fig. 9, 10 schaubildliche Ansichten einer weiteren erfindungsgemäßen Ausführungsform der Schalungsankeraufnahme;
Fig. 11 eine Explosionsdarstellung der weiteren erfindungsgemäßen Ausführungsform gemäß Fig. 9, 10;
Fig. 12 eine Detailansicht der Schalungsankeraufnahme gemäß Fig. 9 bis 11 in der Einbaustellung an der Schalungsvorrichtung; und
Fig. 13 eine Detailansicht gemäß Fig. 12, jedoch in der Betriebsstellung.

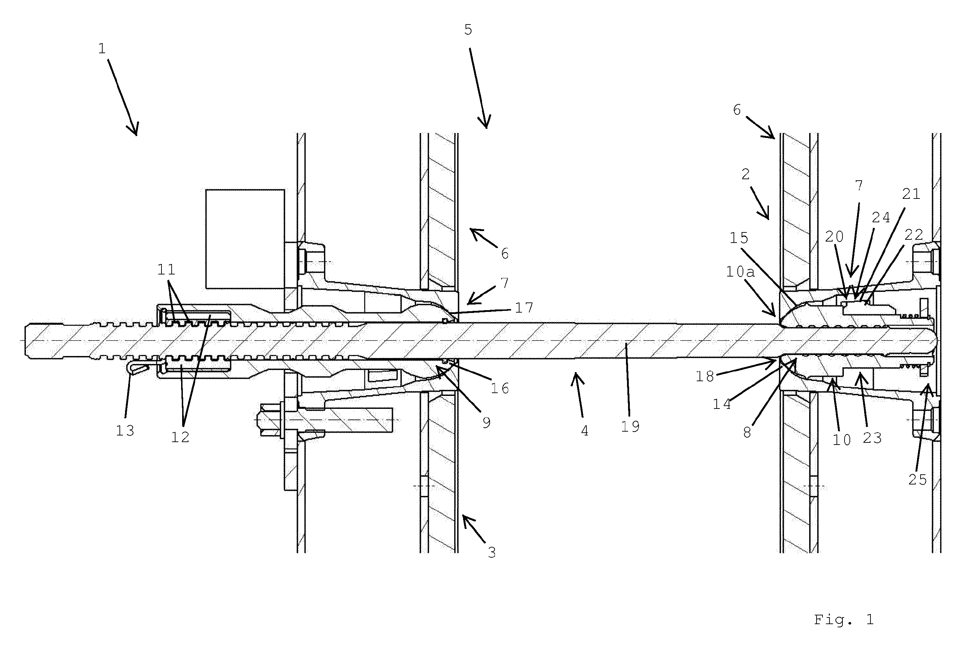

Fig. 1 zeigt einen Ausschnitt einer Schalungsvorrichtung 1, welche bei der Fertigung eines Betonbauteils zum Einsatz kommen kann. Die Schalungsvorrichtung 1 weist ein Schalungselement 2 an der Stellseite und ein weiteres Schalungselement 3 an der Schließseite der Schalungsvorrichtung 1 auf. Das Schalungselement 2 und das weitere Schalungselement 3 sind über zumindest einen Schalungsanker 4 derart miteinander verbunden, dass zwischen dem Schalungselement 2 und dem weiteren Schalungselement 3 ein Freiraum 5 zum Verfüllen mit Beton gebildet ist. Das Schalungselement 2 und das weitere Schalungselement 3 weisen in bekannter Weise jeweils eine Schalungsplatte 6 auf, welche den Freiraum zwischen dem Schalungselement 2 und dem weiteren Schalungselement 3 begrenzen. Darüber hinaus weist das Schalungselement 2 ein Lagerelement 7 auf, an welchem eine Schalungsankeraufnahme 8 für die Aufnahme des einen Endes des Schalungsankers 4 lösbar angeordnet ist. Das Schalungselement 3 weist ein entsprechendes Lagerelement 7 auf, an welchem eine weitere Schalungsankeraufnahme 9 für die Aufnahme des anderen Endes des Schalungsankers 4 lösbar gelagert ist. Die Schalungsankeraufnahme 8 weist ein Aufnahmeelement 10 mit einer Aufnahmeöffnung 10a auf, welche abschnittsweise mit einem Innengewinde ausgebildet ist, in das ein entsprechendes Außengewinde des einen Endes des Schalungsankers 4 eingreifen kann.

Wie aus Fig. 1 weiters ersichtlich, weist der Ankerstab 4 am anderen Ende Rillen 11 auf, mit welchen eine Voreinstellung des Abstands zwischen der Schalungsankeraufnahme 8 und der weiteren Schalungsankeraufnahme 9 ermöglicht wird. Zu diesem Zweck weist die weitere Schalungsankeraufnahme 9 eine Öffnung auf, in welche zusammen mit dem Ankerstab 4 zwei Halbschalen-Haltestücke 12 eingeführt werden. Die Halbschalen-Haltestücke 12 weisen an ihrer Innenseite Rillen 13 auf, welche in die Rillen 11 des Ankerstabs 4 eingreifen. Dadurch sind die Halbschalen-Haltestücke 12 nach dem Einführen in die Öffnung der weiteren Schalungsankeraufnahme 9 fest mit dem Ankerstab 4 verbunden. Im eingeführten Zustand schlagen die Halbschalen-Haltestücke 12 an einem Vorsprung in der Öffnung an. Ab diesem Vorsprung ist eine weitere Öffnung mit einem kleineren Durchmesser als in dem Bereich der Öffnung vorgesehen. Ferner ist am Endbereich der Öffnung ein elastisches Verbindungsmittel in Form eines Fixierfederrings 13 in die Öffnung eingebracht, so dass die Halbschalen-Haltestücke 12 gegen den Vorsprung gedrückt und somit mit der weiteren Schalungsankeraufnahme 9 verriegelt sind. Die weitere Schalungsankeraufnahme 9 auf der Schalungsschließseite und der Schalungsanker 4 sind wie bei der EP 2 816 175 ausgebildet, so dass auf nähere Ausführungen hierzu verzichtet werden kann.

Wie aus Fig. 1 weiters ersichtlich, weist die Schalungsankeraufnahme 8 am der weiteren Schalungsankeraufnahme 9 zugewandten Endbereich einen Kugelabschnitt 14 mit einer sphärisch gekrümmten Außenfläche auf. Das Lagerelement 7 weist einen Kugelpfannenabschnitt 15 mit einer sphärisch konkav gekrümmten Lagerfläche auf, an welcher der Kugelabschnitt 14 der Schalungsankeraufnahme 8 abwälzbar ist. Die weitere Schalungsankeraufnahme 9 weist einen weiteren Kugelabschnitt 16 auf, welcher an einem weiteren Kugelpfannenabschnitt 17 des Lagerelements 7 auf der Schließseite abwälzbar ist. Die Schalungsankeraufnahme 8 und die weitere Schalungsankeraufnahme 9 weisen jeweils eine Durchtrittsöffnung 18 zum Durchtritt des Schalungsankers 4 auf. Gemäß Fig. 1 ist der Ankerstab 4 in einer Mittellage dargestellt, in welcher eine Längsachse 19 des Ankerstabes 4 fluchtend mit der Mittelachse der Durchtrittsöffnungen 18 der Schalungsankeraufnahmen 8, 9 angeordnet ist. Aufgrund des Kugelabschnitts 14 an der Schalungsankeraufnahme 8 und des weiteren Kugelabschnitts 16 an der weiteren Schalungsankeraufnahme 9 kann der Ankerstab 4 aus der gezeigten Mittellage verkippt werden, so dass die Längsachse 19 des Ankerstabes 4 in einem von 90° abweichenden Winkel zu den Schalungsplatten 6 des Schalungselements 2 bzw. des weiteren Schalungselements 3 anordenbar ist. Darüber hinaus bringt die verkippbare Anordnung der Schalungsankeraufnahme 8 den Vorteil mit sich, dass das Einführen des Ankerstabes 4 erleichtert wird.

Der Aufbau der Schalungsvorrichtung 1 erfolgt so, dass zunächst die Schalungsankeraufnahme 8 mit dem Lagerelement 7 des stellseitigen Schalungselements 2 verbunden wird. Danach wird die weitere Schalungsankeraufnahme 9 an dem Schalungsanker 4 angebracht, wobei eine Längeneinstellung hinsichtlich des Abstands zwischen dem Schalungselement 2 und dem weiteren Schalungselement 3 vorgenommen wird. Daraufhin wird der Schalungsanker 4 mit der weiteren Schalungsankeraufnahme 9 an dem Lagerelement 7 des weiteren Schalungselements 3 angeordnet, wobei das freie Ende des Schalungsankers 4 mit der Schalungsankeraufnahme 8 an dem Lagerelement 7 des stellseitigen Schalungselements 2 verbunden wird. Somit werden die Stell- und die Schließschalung über den Schalungsanker 4 miteinander verbunden.

Wie aus Fig. 1 weiters ersichtlich, ist zudem eine Sicherungseinrichtung 20 zur Sicherung des Aufnahmeelements 10 an dem Lagerelement 8 des Schalungselementes 2 vorgesehen.

Die Sicherungseinrichtung 20 weist einerseits ein Drehsicherungselement 21 zur Drehsicherung des Aufnahmeelements 2 gegenüber dem Lagerelement 7 der Schalungsvorrichtung 1 auf. Das Drehsicherungselement 21 ist durch einen Vorsprung 22 gebildet, welcher von einem zylindrischen Abschnitt 23 des Aufnahmeelements 2 hochsteht. In der Betriebsstellung ist der Vorsprung 22 teilweise in einer Ausnehmung 24 des Lagerelements 7 der Schalungsvorrichtung 1 angeordnet, wodurch die Verdrehung der Schalungsankeraufnahme 8 relativ zum Lagerelement 7 begrenzt bzw. blockiert ist.

Das Lagerelement 7 weist gegenüberliegend der Ausnehmung 24 eine weitere Ausnehmung auf, in welcher der Vorsprung 22 in einer alternativen Betriebsstellung angeordnet ist.

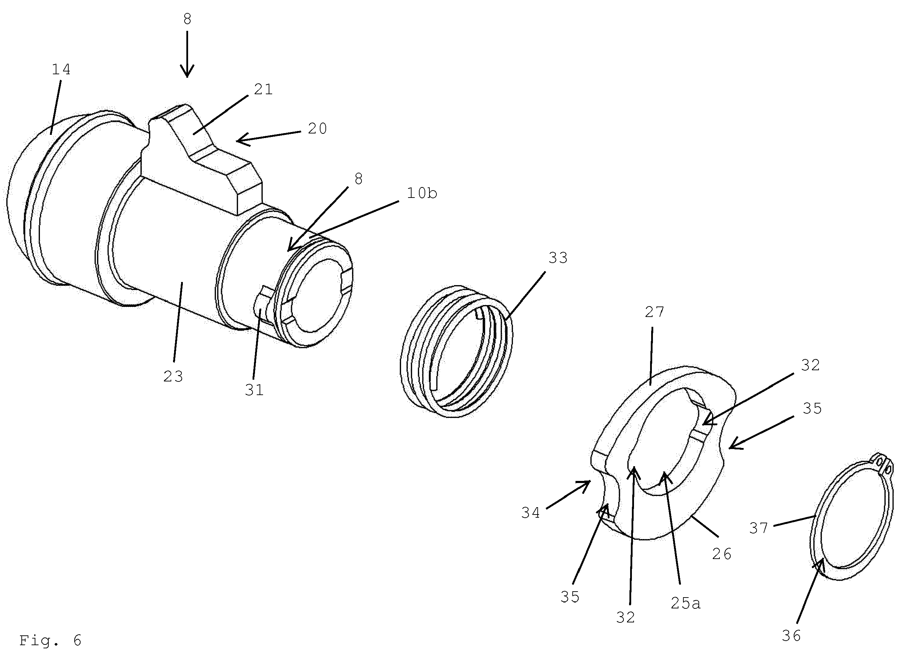

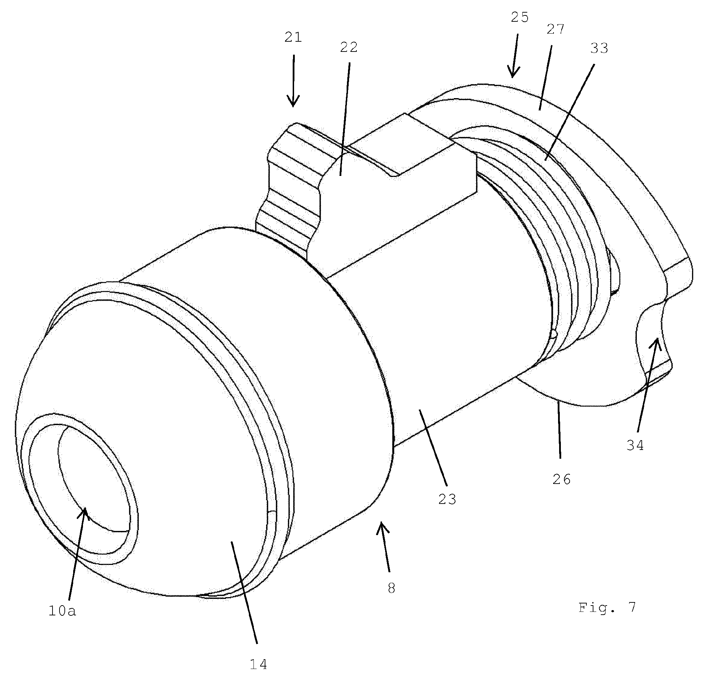

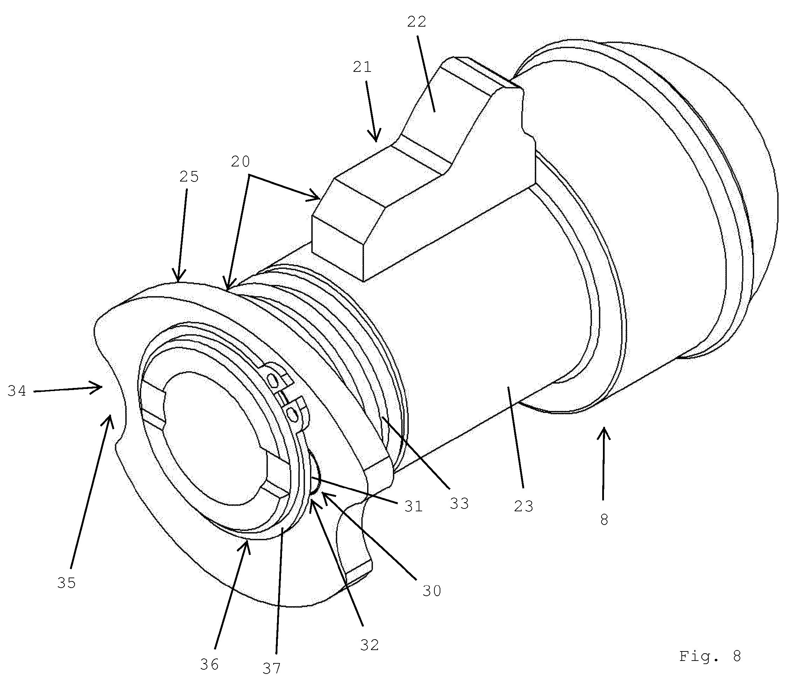

Die Sicherungseinrichtung 20 weist zudem ein Distanzelement 25 auf, welches je nach Kippwinkel der Schalungsankeraufnahme 8 mit der Innenseite des Lagerelementes 7 des Schalungselementes 2 in Kontakt tritt. Das Distanzelement 25 weist eine Montageöffnung 25a (vgl. Fig. 6) auf, über welche das Distanzelement 25 lösbar an dem Aufnahmeelement 2 gehalten ist. Darüber hinaus weist das Distanzelement 25 am Außenumfang eine im Querschnitt kreisbogenförmig gekrümmte erste Kontaktfläche 26 und eine gegenüberliegende zweite Kontaktfläche 27 zur Anlage an dem Lagerelement 7 des Schalungselementes 2 auf. Als Distanzelement 25 ist in der Ausführungsform der Fig. 1 bis 8 eine Distanzscheibe mit im Wesentlichen parallel zueinander angeordneten Außenseiten vorgesehen.

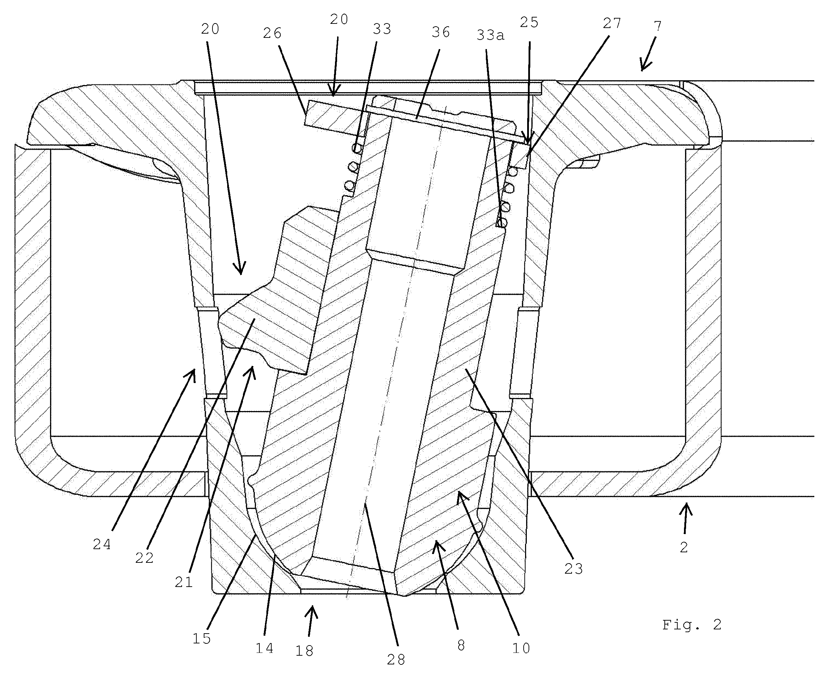

In der gezeigten Ausführungsform weist die erste Kontaktfläche 26 des Distanzelements 25 einen ersten Radialabstand zur Mittelachse 28 des Aufnahmeelements 2, die zweite Kontaktfläche 27 des Distanzelements 25 einen zweiten Radialabstand zur Mittelachse 28 des Aufnahmeelements 2 auf (vgl. Fig. 2 bis 8). Der erste Radialabstand der ersten Kontaktfläche 26 ist um ein Mehrfaches größer als der zweite Radialabstand der zweiten Kontaktfläche 26, so dass die Montageöffnung 25 exzentrisch am Distanzelement 25 ausgebildet ist.

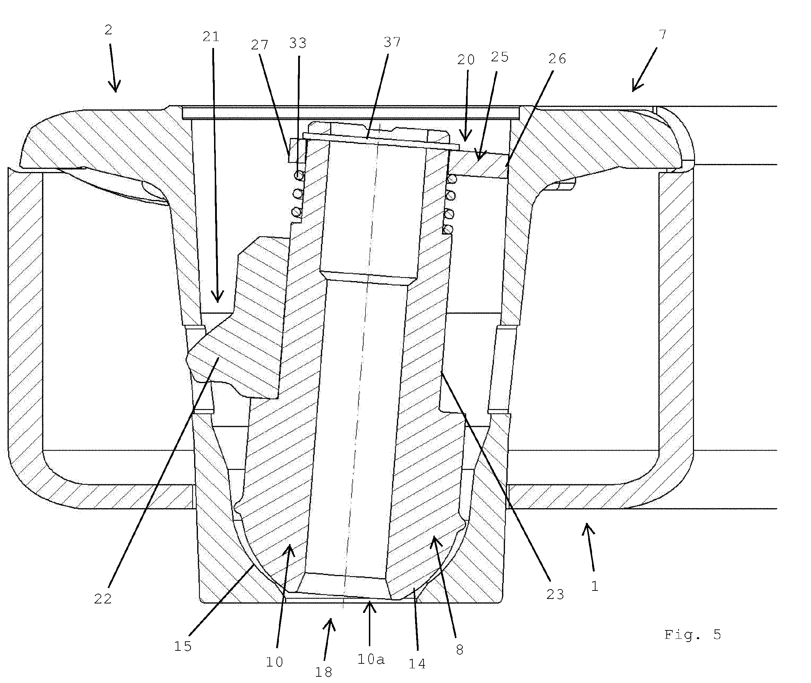

Wie aus Fig. 2 bis 5 ersichtlich, ist das Distanzelement 25 zwischen einer ersten Funktionsstellung (vgl. Fig. 2) zum Einbau des Aufnahmeelements 2 an dem Lagerelement 8 und einer zweiten Funktionsstellung (vgl. Fig. 5) zur Begrenzung einer Verkippung des Aufnahmeelements 2 gegenüber der Mittelachse 28 der Durchtrittsöffnung 18 des Lagerelements 7 in eine erste Kipprichtung überführbar. Die Verkippung in eine zweite, entgegengesetzte Kipprichtung wird durch den Vorsprung 22 begrenzt. Das Distanzelement 25 ist in der zweiten Funktionsstellung, d.h. der Betriebsstellung, um einen Winkel von im Wesentlichen 180° relativ zum Aufnahmeelement 10 verdreht angeordnet. Somit ist die erste Kontaktfläche 26 des Distanzelementes 25 in der Einbaustellung auf Seite des Vorsprungs 22 des Drehsicherungselements 21, in der Betriebsstellung auf der vom Vorsprung 22 des Drehsicherungselements 21 abgewandten Seite des Aufnahmeelements 10 angeordnet.

Wie aus Fig. 2 bis 8 ersichtlich, ist zwischen dem Aufnahmeelement 10 und dem Distanzelement 25 eine Drehsicherung 30 (vgl. Fig. 6 bis 8) vorgesehen. In der gezeigten Ausführung weist die Drehsicherung 30 zwei Erhebungen 31 an einem zylindrischen Abschnitt 10b des Aufnahmeelements 10 auf, wobei die Erhebungen 31 im gesicherten Zustand der Drehsicherung 30 in zwei entsprechende Vertiefungen bzw. Einbuchtungen 32 am Distanzelement 25 eingreifen. Die Vertiefungen 32 gehen dabei von der ansonsten kreisförmigen Montageöffnung 25a des Distanzelementes 25 aus.

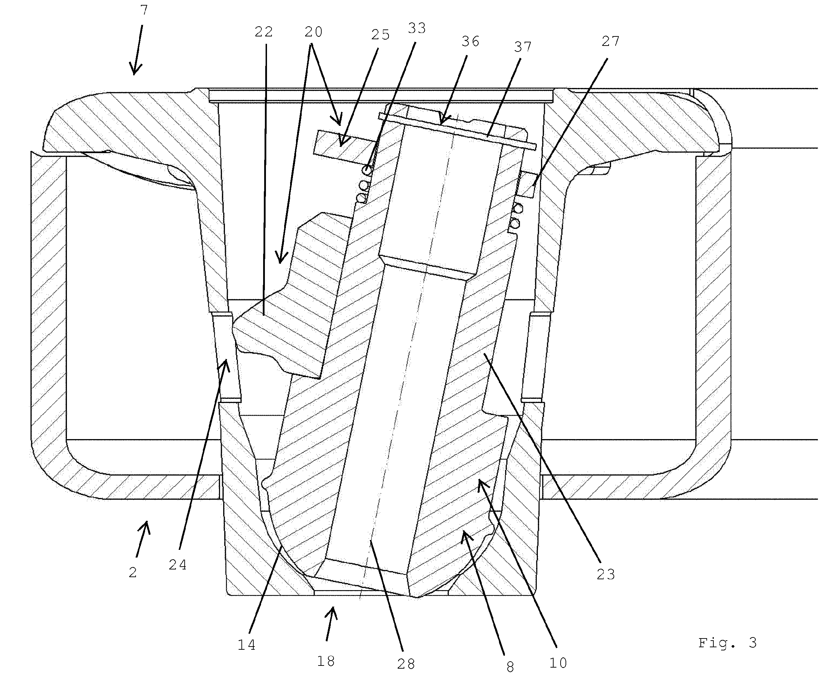

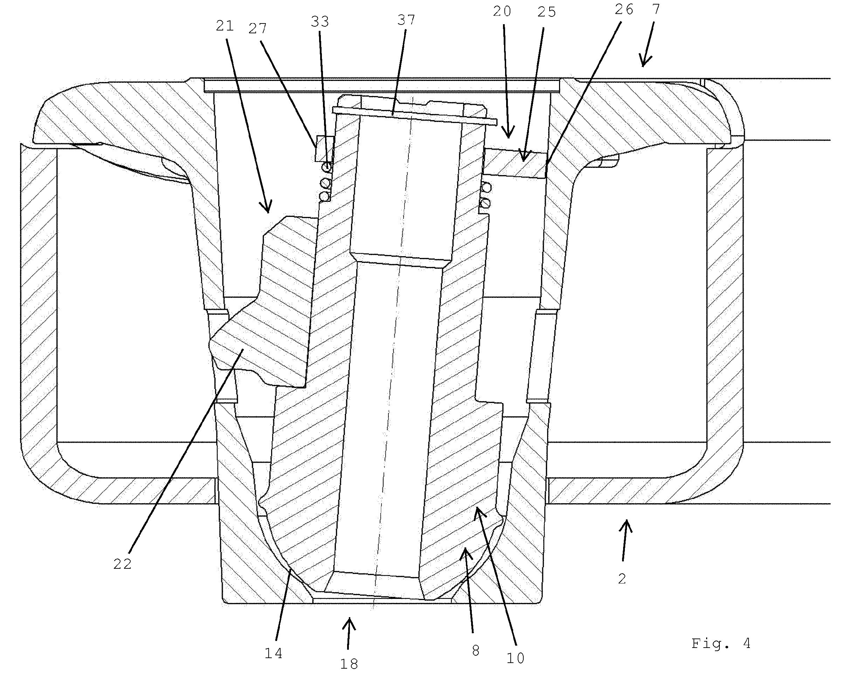

Ausgehend von der ersten Funktionsstellung (Einbaustellung) gemäß Fig. 2 kann das Distanzelement 25 gegen die Wirkung eines Federelements 33 in Richtung der Längsachse 28 des Aufnahmeelements 10 in eine erste Zwischenstellung gemäß Fig. 3 verschoben werden, in welcher die Vertiefungen 32 am Distanzelement 25 unterhalb der Erhebungen 31 am Aufnahmeelement 10 angeordnet sind. Dadurch wird die Drehsicherung 30 zwischen dem Aufnahmeelement 10 und dem Distanzelement 25 in einem gelösten Zustand angeordnet, so dass das Distanzelement 25 aus der ersten Zwischenstellung um im Wesentlichen 180° in eine zweite Zwischenstellung (vgl. Fig. 4) verdrehbar ist, aus welcher das Distanzelement 25 mit Unterstützung des Federelementes 33 in Längsrichtung des Aufnahmeelements 10 in die zweite Funktionsstellung (Betriebsstellung) verschieblich ist. In der Betriebsstellung liegt die Drehsicherung 30 wiederum in einem gesicherten Zustand vor, so dass das Distanzelement 25 gegen eine Verdrehung relativ zum Aufnahmelement 10 gesichert ist. In der gezeigten Ausführung weist das Federelement 33 zur Vorspannung des Distanzelements 25 in Richtung der ersten bzw. zweiten Funktionsstellung eine Schraubenfeder zwischen einer Außenseite des Distanzelements 25 und einer kreisringförmigen Lagerfläche 33a des Aufnahmeelements 10 auf.

Wie aus Fig. 6 bis 8 ersichtlich, ist das Distanzelement 25 einteilig bzw. integral mit einem Griffteil 34 zur Überführung des Distanzelements 25 zwischen der ersten Funktionsstellung und der zweiten Funktionsstelllung verbunden. In der gezeigten Ausführung ist das Griffteil 34 durch zwei gegenüberliegende Einbuchtungen 35 am Außenumfang des Distanzelements 25 gebildet.

Wie aus Fig. 2 bis 8 ersichtlich, ist zudem ein Sicherungselement 36 zur Sicherung des Distanzelements 25 gegen ein Entfernen vom Aufnahmeelement 10 vorgesehen. In der gezeigten Ausführung ist das Sicherungselement 36 durch einen Sicherungsring 37 gebildet, welcher an dem vom Kugelabschnitt 14 abgewandten Ende des Aufnahmeelementes 10 angeordnet ist.

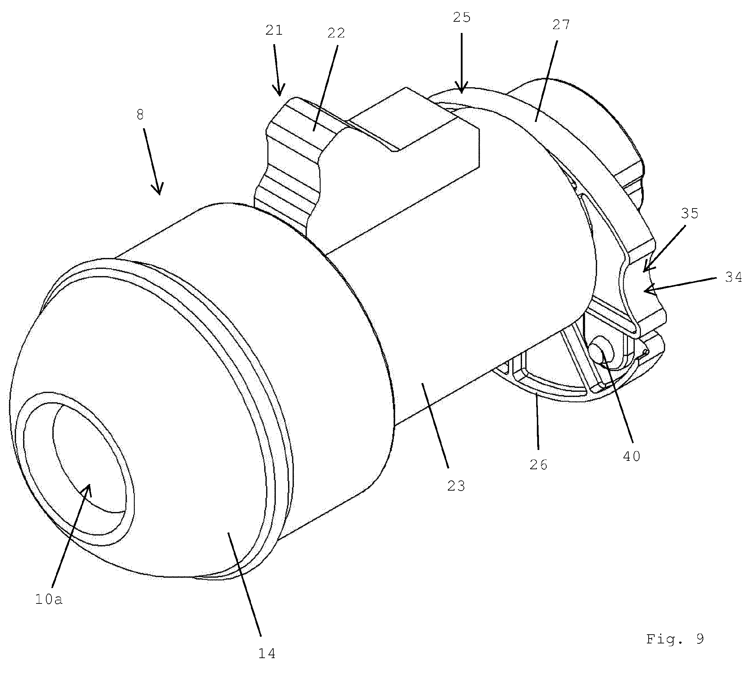

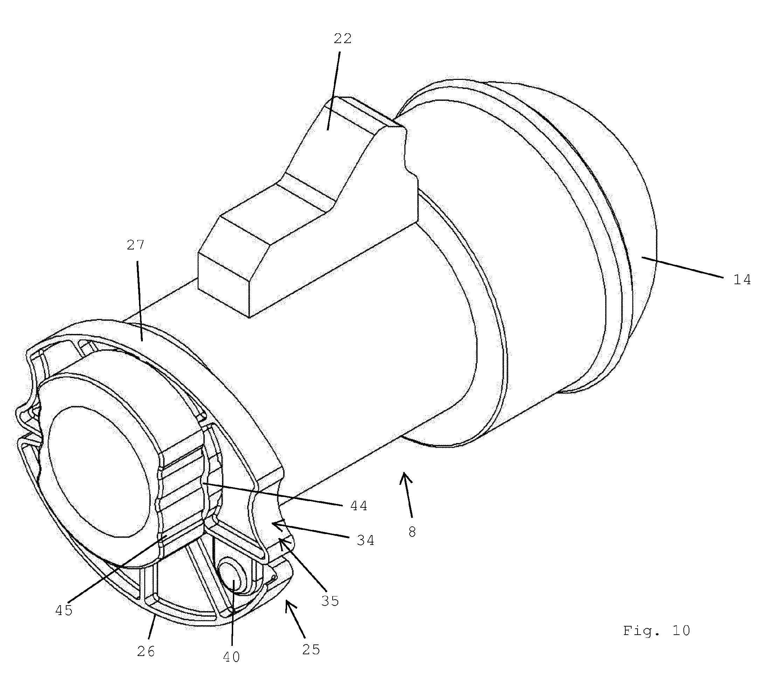

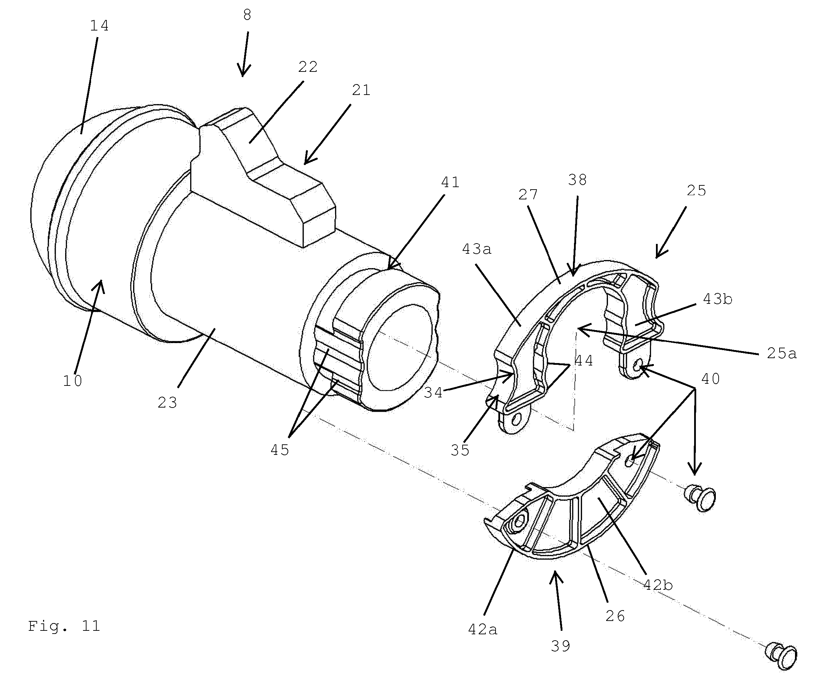

In den Fig. 9 bis 12 ist eine alternative Ausgestaltung der Schalungsankeraufnahme 8 gezeigt, wobei nachstehend lediglich auf die Unterschiede zur Ausführungsform der Fig. 1 bis 8 eingegangen werden soll.

Bei der Ausführung gemäß Fig. 9 bis 12 weist das Distanzelement 25 zwei Halbschalen 38, 39 auf, welche über Bolzenverbindungen 40 lösbar miteinander verbunden sind. Im verbundenen Zustand sind die Halbschalen 38, 39 in einer umlaufenden Nut 41 des Aufnahmeelements 10 angeordnet. Die Halbschale 39 weist hierbei die erste Kontaktfläche 26, die Halbschale 38 die zweite Kontaktfläche 27 auf. Zur Ausbildung der ersten Kontaktfläche 26 weist die Halbschale 39 einen umlaufenden Flanschteil 42a auf, welcher von einem Plattenteil 42b absteht. Entsprechend weist die Halbschale 38 einen umlaufenden Flanschteil 43a auf, welcher von einem weiteren Plattenteil 43b absteht.

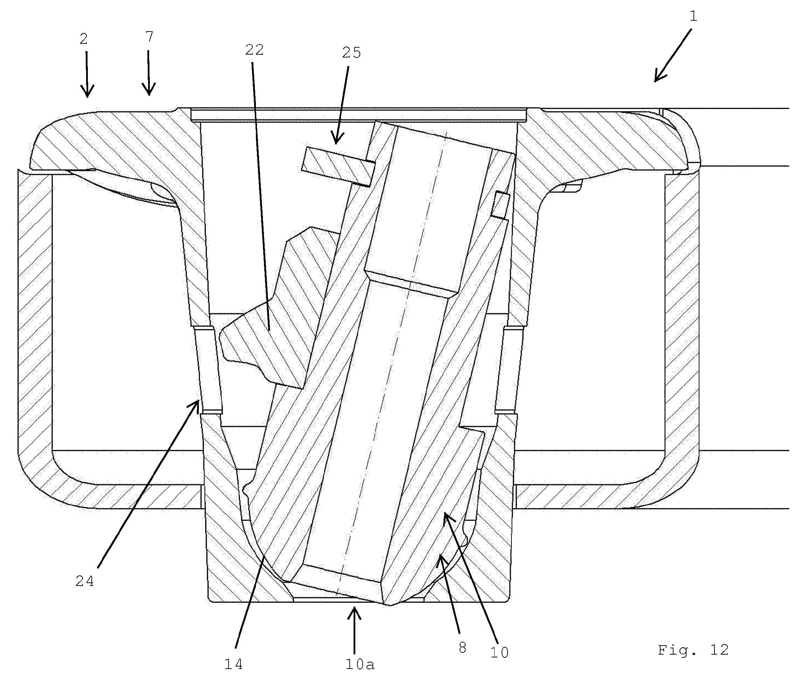

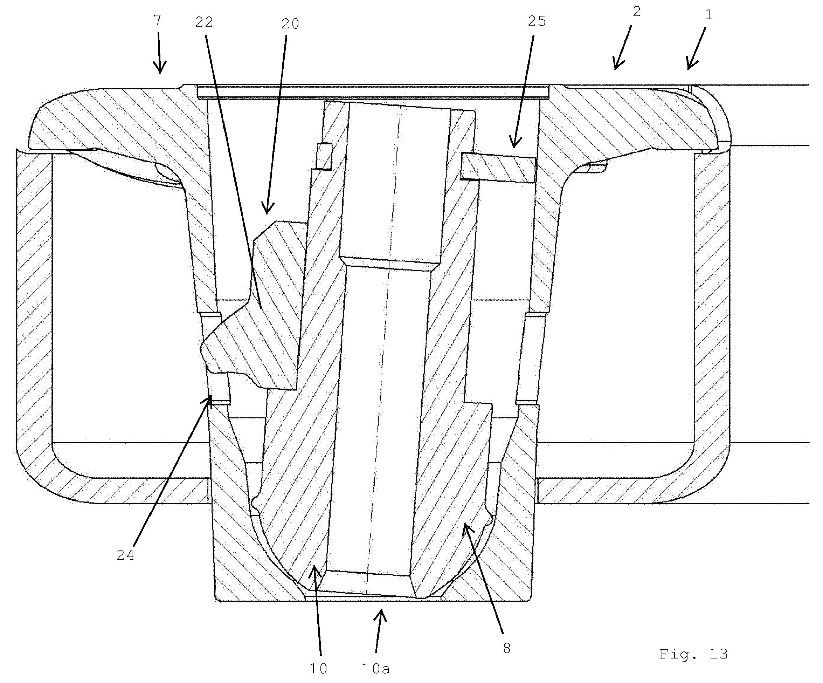

Die Drehsicherung 30 weist bei dieser Ausführung elastisch verformbare Eingriffselemente 44 auf, welche benachbart der Montageöffnung 25a am Flanschteil 42 der Halbschale 38 gebildet sind. Die Eingriffselemente 44 greifen im drehgesicherten Zustand in entsprechende Einbuchtungen 45 des Aufnahmeelements 10 ein. Bei dieser Ausführung ist das Distanzelement 25 in Längsrichtung des Aufnahmeelements 10 unverschieblich an dem Aufnahmeelement 10 angeordnet. Beim Verdrehen des Distanzelements 25 von der Einbaustellung (vgl. Fig. 12) werden die Erhebungen 44 elastisch verformt, so dass die Drehsicherung 30 gelöst wird. Bei Erreichen der Betriebsstellung (vgl. Fig. 13) werden die Erhebungen 44 wiederum elastisch verformt, bis die Drehsicherung 30 im gesicherten Zustand vorliegt.

## Patentansprüche

1. Schalungsankeraufnahme (8) zur Anordnung an einem Lagerelement (7) eines Schalungselementes (2), mit einem Aufnahmeelement (10), welches eine Aufnahmeöffnung (10a) zur Einführung eines Ankerstabs (4) und einen Kugelabschnitt (14) zur Lagerung an dem Lagerelement (7) des Schalungselementes (2) aufweist, und mit einer Sicherungseinrichtung (20) zur Sicherung des Aufnahmeelements (10) an dem Lagerelement (7) des Schalungselementes (2), **dadurch gekennzeichnet, dass** die Sicherungseinrichtung (20) ein Distanzelement (25) zur Anlage an dem Lagerelement (7) des Schalungselementes (2) aufweist, wobei das Distanzelement (25) eine Montageöffnung (25a) zur Halterung an dem Aufnahmeelement (10) aufweist.

2. Schalungsankeraufnahme (8) nach Anspruch 1, **dadurch gekennzeichnet, dass** zwischen dem Aufnahmeelement (10) und dem Distanzelement (25) eine Drehsicherung (30) vorgesehen ist, welche vorzugsweise zumindest eine Erhebung (31) und eine entsprechende Vertiefung (32) aufweist.

3. Schalungsankeraufnahme (8) nach Anspruch 1 oder 2, **dadurch gekennzeichnet, dass** das Distanzelement (25) am Außenumfang eine vorzugsweise kreisbogenförmig gekrümmte erste Kontaktfläche (26) zur Anlage an dem Lagerelement (7) des Schalungselementes (2) aufweist.

4. Schalungsankeraufnahme (8) nach Anspruch 3, **dadurch gekennzeichnet, dass** die erste Kontaktfläche (26) des Distanzelements (25) einen ersten Radialabstand zur Mittelachse (28) des Aufnahmeelements (10) und eine zweite Kontaktfläche (27) des Distanzelements (25) einen zweiten Radialabstand zur Mittelachse (28) des Aufnahmeelements (10) aufweist, wobei der erste Radialabstand der ersten Kontaktfläche (26) größer als der zweite Radialabstand der zweiten Kontaktfläche (27) ist.

5. Schalungsankeraufnahme (8) nach einem der Ansprüche 1 bis 4, **dadurch gekennzeichnet, dass** das Distanzelement (25) zwischen einer ersten Funktionsstellung, insbesondere zum Einbau des Aufnahmeelements (10) an dem Lagerelement (7), und einer zweiten Funktionsstellung, insbesondere zur Begrenzung einer Verkippung des Aufnahmeelements (10) in eine erste Kipprichtung, überführbar ist, wobei das Distanzelement (25) in der zweiten Funktionsstellung um einen von 0° oder 360° verschiedenen Winkel von vorzugsweise im Wesentlichen 180° relativ zum Aufnahmeelement (10) verdreht angeordnet ist.

6. Schalungsankeraufnahme (8) nach Anspruch 5, **dadurch gekennzeichnet, dass** das Distanzelement (25) von der ersten Funktionsstellung in Längsrichtung des Aufnahmeelements (10) in eine erste Zwischenstellung verschieblich ist, in welcher die Drehsicherung (30) zwischen dem Aufnahmeelement (10) und dem Distanzelement (25) in einem gelösten Zustand vorliegt, wobei das Distanzelement (25) aus der ersten Zwischenstellung in eine zweite Zwischenstellung verdrehbar ist, aus welcher das Distanzelement (25) in Längsrichtung des Aufnahmeelements (10) in die zweite Funktionsstellung verschieblich ist, in der die Drehsicherung (30) in einem gesicherten Zustand vorliegt.

7. Schalungsankeraufnahme (8) nach Anspruch 6, **dadurch gekennzeichnet, dass** ein Federelement (33) zur Vorspannung des Distanzelements (25) in Richtung der ersten bzw. zweiten Funktionsstellung vorgesehen ist, wobei das Federelement (33) bevorzugt eine Schraubenfeder zwischen dem Distanzelement (25) und einer vorzugsweise kreisringförmigen Lagerfläche (33a) des Aufnahmeelements (10) aufweist.

8. Schalungsankeraufnahme (8) nach einem der Ansprüche 1 bis 5, **dadurch gekennzeichnet, dass** das Distanzelement (25) lösbar miteinander verbundene Halbschalen (38, 39) aufweist, wobei das Distanzelement (25) im verbundenen Zustand der Halbschalen (38, 39) in einer umlaufenden Nut (41) des Aufnahmelements (10) angeordnet ist.

9. Schalungsankeraufnahme (8) nach Anspruch 8, **dadurch gekennzeichnet, dass** das Distanzelement (25) in Längsrichtung des Aufnahmeelements (10) unverschieblich an dem Aufnahmeelement (10) gehalten ist, wobei die Drehsicherung (30) ein elastisch verformbares Eingriffselement (44) aufweist.

10. Schalungsankeraufnahme (8) nach einem der Ansprüche 1 bis 9, **dadurch gekennzeichnet, dass** die Sicherungseinrichtung (20) ein Drehsicherungselement (21) zur Drehsicherung des Aufnahmeelements (10) gegenüber dem Lagerelement (7) des Schalungselementes (2) aufweist, wobei das Drehsicherungselement (21) vorzugsweise einen Vorsprung (22) am Aufnahmeelement (10) zum Eingriff in eine Ausnehmung (24) des Lagerelements (7) des Schalungselementes (2) aufweist.

11. Schalungsankeraufnahme (8) nach einem der Ansprüche 1 bis 10, **dadurch gekennzeichnet, dass** als Distanzelement (25) eine Distanzscheibe mit im Wesentlichen parallel zueinander angeordneten Außenseiten vorgesehen ist.

12. Schalungsankeraufnahme (8) nach einem der Ansprüche 1 bis 11, **dadurch gekennzeichnet, dass** das Distanzelement (25) mit einem Griffteil (34) zur Überführung des Distanzelements (25) zwischen der ersten Funktionsstellung und der zweiten Funktionsstellung verbunden ist, wobei das Griffteil (34) bevorzugt durch zumindest eine Einbuchtung (35) des Distanzelements (25) gebildet ist.

13. Schalungsankeraufnahme (8) nach einem der Ansprüche 1 bis 12, **dadurch gekennzeichnet, dass** das Distanzelement (25) mittels eines Sicherungselements (36), insbesondere mittels eines Sicherungsrings, einer Sicherungsfeder (37) oder einer Schraubverbindung, gegen ein Entfernen vom Aufnahmeelement (10) gesichert ist.

14. Schalungsvorrichtung (1) mit einer Schalungsankeraufnahme (8) zur Verbindung mit einem Schalungsanker (4) und mit einem Schalungselement (2), welches ein Lagerelement (7) zur Lagerung der Schalungsankeraufnahme (8) aufweist, **dadurch gekennzeichnet, dass** die Schalungsankeraufnahme (8) nach einem der Ansprüche 1 bis 13 ausgebildet ist.

15. Schalungsvorrichtung (1) nach Anspruch 14, **dadurch gekennzeichnet, dass** in einem Abstand zu dem Schalungselement (2) ein weiteres Schalungselement (3) angeordnet ist, an dem eine weitere Schalungsankeraufnahme (9) vorgesehen ist, wobei ein Schalungsanker (4) jeweils mit der Schalungsankeraufnahme (8) und der weiteren Schalungsankeraufnahme (9) verbunden ist.
